# EUROPEAN PATENT APPLICATION

(11) **EP 4 155 982 A1**
(43) Date of publication of application: **29.03.2023**
(21) Application number: 21809592.5
(22) Date of filing: 21.05.2021
(51) Int. Cl.: G06F 16/957

(54) **PAGE DISPLAY METHOD AND APPARATUS, AND ELECTRONIC DEVICE**

(30) Priority: 22.05.2020 CN 202010444374
(71) Applicant: ALIBABA GROUP HOLDING LIMITED, George Town, Grand Cayman (KY)
(72) Inventor: WU, Zhenfang, Hangzhou, Zhejiang 311121 (CN); GUO, Quan, Hangzhou, Zhejiang 311121 (CN); QIU, Haoxuan, Hangzhou, Zhejiang 311121 (CN); HUANG, Jinyang, Hangzhou, Zhejiang 311121 (CN); ZHU, Huihui, Hangzhou, Zhejiang 311121 (CN); CAO, Jinjing, Hangzhou, Zhejiang 311121 (CN)
(74) Representative: Patentgruppen A/S
(86) International application number: PCT/CN2021/095081
(87) International publication number: WO 2021/233409

(57) **Abstract**

A page display method, a method for providing page information, a method for application switching, a storage medium, an apparatus, and an electronic device. The method comprises: after an access request for a target page is received, obtaining page data, the page data comprising data corresponding to multiple tabs, the multiple tabs comprising a first tab and at least one second tab, the first tab comprising links of multiple first application services, the links being used for skipping to present undertaking pages of the first application services, and the second tab corresponding to an undertaking page of a second application service (S201); and by receiving a switching operation performed between the multiple tabs, switching to the second tab to display the undertaking page of the second application service (S202). Access to multiple application services can be achieved more efficiently, and the excessive effect on flow balance among the multiple application services is avoided.

## Description

This application claims priority to Chinese Patent Application No. 202010444374.8, filed on 22 May 2020 and entitled "PAGE DISPLAY METHOD AND APPARATUS, AND ELECTRONIC DEVICE," which is incorporated herein by reference in its entirety.

### TECHNICAL FIELD

The present application relates to the technical field of page information processing, and, more particularly, to a page display method, a method for providing page information, a method for application switching, a storage medium, an apparatus, and an electronic device.

### BACKGROUND

For mobile applications, a home page is usually the first page presented to users after an application is started, and usually plays a role of traffic distribution. That is, the users can obtain access entries to a plurality of application services by providing links to various application services in the home page, and then access a render page of the application services by clicking on the corresponding links and the like. For example, in a commodity object information service system, the home page of a client can usually provide links to various application services such as "Live Commerce," "Special Sale," and "Good Store Recommendation," and can direct traffic from the home page to specific application services, and the like. Therefore, the home page design is particularly important for the traffic balance among the application services in the application.

In the conventional techniques, when a new application service needs to obtain traffic through the home page, a common approach is to add a new resource position (for example, a new "Floor") to the home page, and to display a link to the new application service in the new resource position. However, there will be certain problems in the location selection of the new resource in the home page. If the new resource position is close to the bottom of the home page, it may not be displayed until the users slide a lot down the screen, resulting in a relatively low exposure of the new resource position. If the new resource position is at the front of the home page, it may mean that the resource positions of other original application services are moved backwards; however, this part of content is meaningless for users who are not very interested in the new application service, and on the contrary, the exposure of the content in which the users are really interested is affected. In addition, with the continuous emergence of new application services, blindly adding new modules to the home page may also cause excessive overall height of the home page, resulting in a continuous low conversion rate for modules other than the first and second screens.

Therefore, how to more efficiently implement access to a plurality of application services while avoiding excessive impact on traffic balance among the plurality of application services has become a technical problem that needs to be solved by those skilled in the art.

### SUMMARY

The present application provides a page display method and apparatus, and electronic device, which more efficiently achieves an access to a plurality of application services while avoiding excessive impact on traffic balance among the plurality of application services.

The present application provides the following solutions:
a page display method, comprising:
acquiring page data after receiving an access request for a target page, the page data comprising data corresponding to a plurality of tab pages, and the plurality of tab pages comprising a first tab page and at least one second tab page, wherein the first tab page comprises links to a plurality of first application services, and the links are used to jump to render a render page of the first application services; the second tab page corresponds to a render page of a second application service; and
switching to the second tab page to display the render page of the second application service by receiving a switching operation performed between the plurality of tab pages.

A method for providing page information, comprising:
receiving an access request for a target page submitted by a client; and
generating page data of the target page and returning the page data to the client, the page data comprising data corresponding to a plurality of tab pages, and the plurality of tab pages comprising a first tab page and at least one second tab page, wherein the first tab page comprises links to a plurality of first application services, and the links are used to jump to render a render page of the first application module; and the second tab page corresponds to a render page of a second application service, so as to switch to the second tab page to display the render page of the second application service by receiving a switching operation performed between the plurality of tab pages.

A page display method, comprising:
acquiring page data after receiving an access request for a target page, wherein the page data comprises page type information corresponding to the tab page and page content loading related information;
starting a corresponding page container according to page type information of a target tab page in a process of displaying the tab pages in a switching manner in the same page space; and
loading page content of the target tab page through the page container, and displaying the page content in the page space.

A page, wherein
the page is a client page of an application program, and the application program is associated with an application service set;
the page comprises a plurality of tab pages, and the plurality of tab pages comprise a first tab page and at least one second tab page, wherein the first tab page displays links to a plurality of first application services in the application service set in an aggregated manner, so as to provide an access entry to the first application services through the links; and the second tab page corresponds to a render page of a second application service in the application service set, so as to provide an access entry to the second application service by switching to the tab pages.

An application program switching method, comprising:
providing a plurality of tab pages in a page of a first application program, the plurality of tab pages comprising a first tab page and at least one second tab page, wherein the first tab page corresponds to the first application program, and the second tab page corresponds to a second application program; and
starting the second application program by switching the tab pages.

A page display apparatus, comprising:
a page data acquisition unit, configured to acquire page data after receiving an access request for a target page, the page data comprising data corresponding to a plurality of tab pages, and the plurality of tab pages comprising a first tab page and at least one second tab page, wherein the first tab page comprises links to a plurality of first application services, and the links are used to jump to render a render page of the first application services; the second tab page corresponds to a render page of a second application service; and
a page switching unit, configured to switch to the second tab page to display the render page of the second application service by receiving a switching operation performed between the plurality of tab pages.

An apparatus for providing page information, comprising:
a request receiving unit, configured to receive an access request for a target page submitted by a client; and
a page data generation unit, configured to generate page data of the target page and return the page data to the client, the page data comprising data corresponding to a plurality of tab pages, and the plurality of tab pages comprising a first tab page and at least one second tab page, wherein the first tab page comprises links to a plurality of first application services, and the links are used to jump to render a render page of the first application module; and the second tab page corresponds to a render page of a second application service, so as to switch to the second tab page to display the render page of the second application service by receiving a switching operation performed between the plurality of tab pages.

A page display apparatus, comprising:
a page data acquisition unit, configured to acquire page data after receiving an access request for a target page, wherein the page data comprises page type information corresponding to the tab page and page content loading related information;
a container starting unit, configured to start a corresponding page container according to page type information of a target tab page in a process of displaying the tab pages in a switching manner in the same page space; and
a page loading unit, configured to load page content of the target tab page through the page container and display the page content in the page space.

An apparatus for switching an application program, comprising:
a tab page providing unit, configured to provide a plurality of tab pages in a page of a first application program, the plurality of tab pages comprising a first tab page and at least one second tab page, wherein the first tab page corresponds to the first application program, and the second tab page corresponds to a second application program; and
an application program starting unit, configured to start the second application program by switching the tab pages.

According to some embodiments provided by the present application, the present application discloses the following technical effects:
with the embodiments of the present application, a plurality of tab pages can be provided for a target page, comprising a first tab page and at least one second tab page, wherein the first tab page can comprise links to a plurality of first application services, so as to display a render page of the first application services by clicking on the links and the like. The second tab page mainly corresponds to a render page of a second application service, so that the render page of the second application service can be displayed by switching the tab pages. It can be seen that the embodiments of the present application enrich the way to enter render pages of the application services, so that some application services do not need to occupy the resource positions of the first tab page, and the render page of the second application service can also be entered through the first tab page without causing excessive height of the first tab page. Therefore, the plurality of application services can be displayed more efficiently, and meanwhile, excessive impact on traffic balance among the plurality of application services can be avoided.

Certainly, implementing any product of the present application does not necessarily need to achieve all of the advantages described above at the same time.

### BRIEF DESCRIPTION OF DRAWINGS

To describe the technical solutions in the embodiments of the present application or in the conventional techniques more clearly, the following briefly describes the accompanying drawings required for describing the embodiments. Apparently, the accompanying drawings in the following description are merely some embodiments of the present application, and those of ordinary skills in the art may further derive other accompanying drawings from these accompanying drawings without inventive efforts.
FIG. 1 is a schematic diagram of a system architecture provided by an embodiment of the present application;
FIG. 2 is a flowchart of a first method provided by an embodiment of the present application;
FIG. 3 is a schematic diagram of a page structure provided by an embodiment of the present application;
FIG. 4-1 to FIG. 4-3 are schematic diagrams of tab page switching provided by an embodiment of the present application;
FIG. 5 is a flowchart of a second method provided by an embodiment of the present application;
FIG. 6 is a flowchart of a third method provided by an embodiment of the present application;
FIG. 7 is a flowchart of a fourth method provided by an embodiment of the present application;
FIG. 8 is a schematic diagram of a first apparatus provided by an embodiment of the present application;
FIG. 9 is a schematic diagram of a second apparatus provided by an embodiment of the present application;
FIG. 10 is a schematic diagram of a third apparatus provided by an embodiment of the present application;
FIG. 11 is a schematic diagram of a fourth apparatus provided by an embodiment of the present application; and
FIG. 12 is a schematic diagram of an electronic device provided by an embodiment of the present application.

### DESCRIPTION OF EMBODIMENTS

The technical solutions in the embodiments of the present application will be clearly and completely described below with reference to the accompanying drawings in the embodiments of the present application. Apparently, the described embodiments are merely some, but not all, of the embodiments of the present application. Based on the embodiments in the present application, all other embodiments obtained by those of ordinary skill in the art shall fall within the protection scope of the present application.

In the embodiments of the present application, some application services can be displayed by switching tab pages. That is, a plurality of tab options can be provided in the page, one of which can be used as a main tab page (which can be referred to as a first tab page in the embodiments of the present application), for example, it can be an original home page, etc., where links to a plurality of first application services can be displayed. In a process of browsing the first tab page by a user, render pages of various application services can be displayed by conventionally clicking on the links and other methods. In addition, at least one second tab page can also be included, and such second tab page can be a render page of a specific second application service, for example, can be a render page of a "Live Commerce" module and the like. In the process of browsing the first tab page by the user, the second tab page can be switched to for display by sliding left and right, so that the render page of the corresponding application service can be displayed. That is, the specific application services can be displayed not only by conventionally clicking on the links, but also by sliding left and right to switch the tab pages; in the process of browsing the first tab page, the user can enter the render page of a specific application service by clicking on the links in the page, and can also enter the render page of a specific application service by sliding left and right on the first tab page and the like. In this way, the application service displayed by sliding does not need to occupy a certain floor or resource position in the first tab page, and thus the page height of the first tab page will not be increased, and other application services in the first tab page will not be affected. This method is more meaningful for newly launched application services that need to be supported through the home page. For example, in order to obtain more traffic, a newly launched application service may need to be exposed through the home page, but there may be various problems mentioned in the BACKGROUND if the application service is added to a certain resource position on the home page. However, with the solution provided by the embodiments of the present application, a render page corresponding to the application service can be used as a second tab page of the page, and the user can also directly enter the render page of the application service by sliding left or right in the process of browsing the home page (the first tab page). That is, an access entry to the render page of the application service can be provided through the home page in the form of tab page.

In a specific implementation, the function of dynamic component management can also be achieved for a client, so that the types corresponding to specific tab pages can be dynamically changed, and different tab pages in the same page can also have different page types, including but not limited to native pages, H5 (fifth-generation hypertext markup language) pages, light application pages, hybrid development pages (for example, native pages developed through Web technologies), and the like. Specifically, a server can provide relevant information such as type information of each tab page and loading modes of page content through a pre-agreed protocol. The client can integrate containers corresponding to various types (which can exist in the form of SDK packages and the like). After receiving specific page data, the client can start the corresponding container according to the type of the specific tab page, and then load the page content through the specific container for display when switching to the tab page. In this way, the number of tab pages and the corresponding specific second application service can be flexibly configured, and even customized configurations of individuals can be realized according to personalized information of the user without relying on the update of the client version.

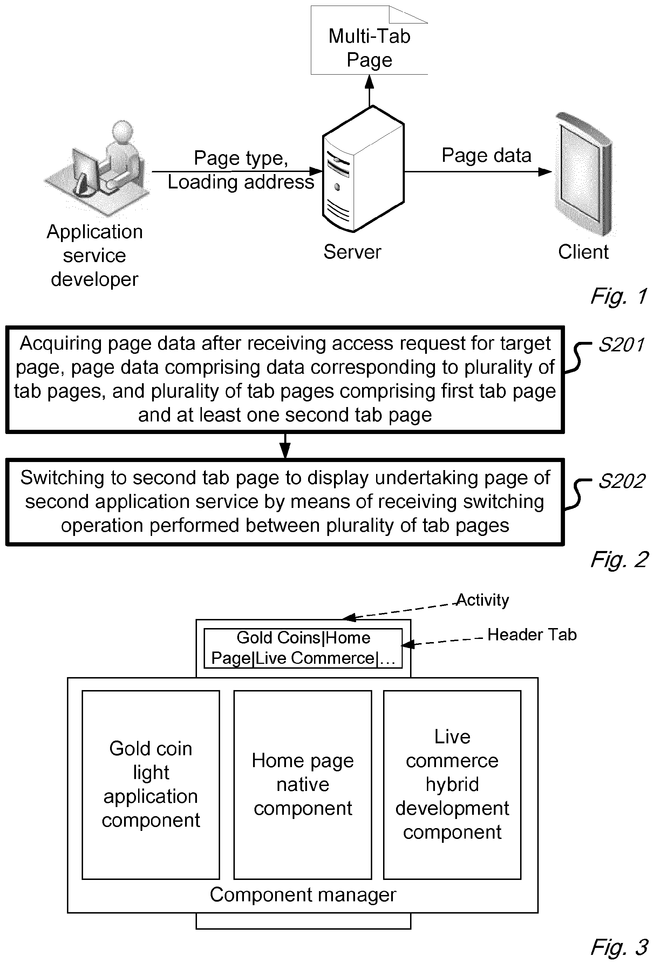

In a specific implementation, from the perspective of system architecture, referring to FIG. 1, the embodiments of the present application can involve a client and a server of a commodity object information service system and other systems, wherein the server can be configured to provide specific page data, and the client can display the page data and perform switching between different tab pages through gesture recognition in the process of browsing by users. The specific content of the second tab page can be provided by an application service developer and the like. Specifically, if the application service developer needs to direct traffic to the render page through the first tab page such as the home page, it can provide information of the render page thereof to the server, and the server generates a specific second tab page. In the case of dynamically determining the second tab page, the application service developer can provide information such as the page type and loading address of the render page to the server, and the server can provide the above information to the client when providing page data to the client. The client starts the corresponding container according to the specific page type, and then loads the page content from the specific address through the container for display. Certainly, native pages can be implemented by loading corresponding classes and the like, which will be described in detail below.

### Embodiment I

First, the embodiment I provides a method for providing page information from the perspective of a client. Referring to FIG. 2, the method may specifically comprise:
S201: acquiring page data after receiving an access request for a target page, the page data comprising data corresponding to a plurality of tab pages, and the plurality of tab pages comprising a first tab page and at least one second tab page, wherein the first tab page comprises links to a plurality of first application services, and the links are used to jump to render a render page of the first application services; the second tab page corresponds to a render page of a second application service; and
specifically, the target page may be a home page of the client, or may be other entry-type or traffic-directing pages. In the embodiments of the present application, the target page may correspond to a plurality of tab pages, wherein the page content of the first tab page thereof can be displayed in a default state. The so-called first tab page, in which the specific content displayed can be the same as or similar to the conventional home page or entry page and the like, can comprise links to a plurality of specific application services, and traffic can be directed to the specific application services by clicking on the links. At the same time, the page can further comprise a plurality of second tab pages, and such second tab pages can correspond to a render page of a specific application service, that is, the function of the second tab page is different from that of the first tab page.

The specific second tab page can be provided by an application service developer. For example, after the developer of certain application service develops a specific application service and generates a render page, if it needs to direct traffic to the application service through the home page, information of the render page of the application service can be provided to a server, and the server can add the render page to the target page as one of the tab pages.

In an implementation manner, the number of associated tab pages in a specific target page and the application service corresponding to a specific tab page can be fixed, and each tab page can have the same page type. However, in this way, if it needs to modify the number of the tab pages associated with the page or the application service corresponding to a specific tab page and the like, it may involve updating the client version. In practical applications, the occurrence probability or demand for the above modification may be relatively high. For example, there may be new application services to which traffic needs to be directed through the home page; or there are many application services to which traffic needs to be directed through the home page, and only part of the application services can be selected in each cycle to add to the tab page and replaced in the next cycle; there may even be situations where personalized information for users is configured, for example, different users may be interested in different application services, and different application services can be displayed through specific tab pages, so as to provide the efficiency of traffic directing; in addition, for application service developers, it may be necessary to use different technologies to develop according to the characteristics of specific application services, so that the render pages corresponding to different application services may have different types, and so on.

Therefore, in an optional embodiment, the specific number of tab pages, the application services associated with the tab pages, the types of the render pages of the specific application services, and the like can be dynamically determined to achieve a more flexible display. Specifically, the server can dynamically determine the number of associated tab pages in the target page, the application service associated with a specific second tab page, and the like according to specific operational requirements, the personalized information of the users, or like. In addition, according to a pre-established protocol, the page type of the render page corresponding to a specific tab page, the loading mode information of the page content, and the like may be carried when providing page data to the client. In addition, containers corresponding to a variety of different page types can be integrated in the client, which can be specifically implemented through corresponding SDK packages. In addition, a component management function can be provided at the client. After receiving the page data provided by the server, the corresponding container can be started according to the page type corresponding to a specific tab page, and then the page content can be loaded according to the corresponding loading mode through the specific container. In this way, when switching to the corresponding tab page, the specific page content can be displayed.

It should be noted that specific processing modes of the client may be different for different page types, and accordingly, the information provided by the server to the client may also be different. For example, for a system native page, that is, a page developed in a native language of the system, the developer is usually required to package the page content to the server and integrate it into a client App, therefore, for such native page, the server can provide the type information and package name information of the page when providing the page data thereof, and the client can load the page content in the corresponding class according to the package name. In addition to the native page, for H5 pages, light application pages, or hybrid development pages, the page data provided by the server can comprise a specific page type and page loading address information. The client can start the container of a corresponding type according to a specific proxy component, and then load the corresponding page content according to the specific loading address.

There may also be various loading timings for specific tab pages. For example, in one manner, the container can be created, and the page content can be loaded after receiving a specific tab page switching request. Alternatively, it can also be implemented by preloading to avoid causing the users to wait. That is, the process of starting the container and loading the page content can be completed before receiving the specific request to switch the tab page, so that the content of the target page can be directly displayed when the specific switching is performed.

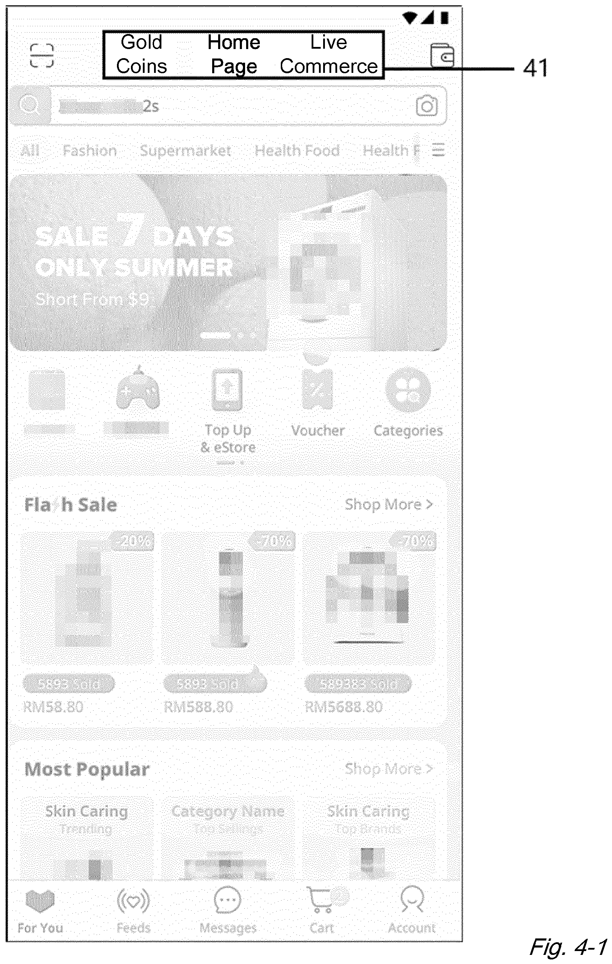

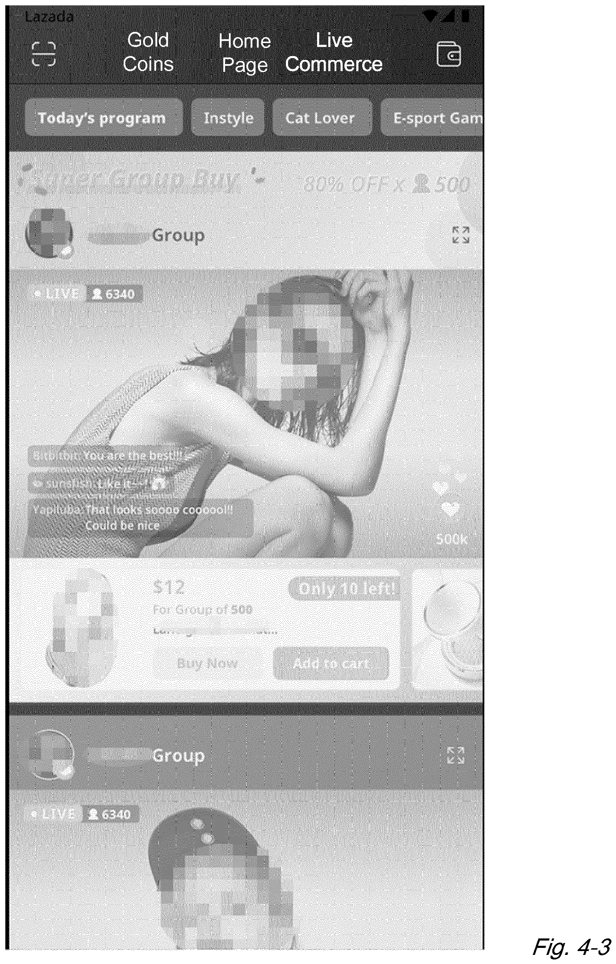

It should be noted that in the embodiments of the present application, since different tab pages can be independent pages, each page can also have different background colors, or the area where the tab bar at the top of the page is located can also have different themes based on the different background colors of the page. For example, as shown in FIG. 4-1, the background color of the "Home Page" is mainly white, and thus the area where the tab option is located can also have a white theme. As shown in FIG. 4-3, the background color of the "Live Commerce" page is mainly dark gray, and thus the area where the tab option is located can also have a dark gray theme, and so on.

In addition, the second application service can be one of the plurality of first application services; or the second application service can also be different from the plurality of first application services.

S202: switching to the second tab page to display the render page of the second application service by receiving a switching operation performed between the plurality of tab pages.

The first tab page may be displayed first after acquiring the specific page data. In a state of displaying the first tab page, the render page of the first application service corresponding to the link can be displayed by receiving a clicking operation performed on the link. In addition, the render page of the second application service can also be displayed by receiving a switching operation performed between the plurality of tab pages. Specifically, in a state of displaying the first tab page in a full screen, the links to the plurality of first application services can be displayed in a scrolling manner in response to a sliding operation in a length direction of the screen, and the plurality of tab pages can be displayed in a switching manner in response to a sliding operation in a width direction of the screen. That is, both the first application services and the second application service can provide access entries through the first tab page, but the access entries are provided in different ways. The access entries corresponding to the first application services occupy the resource positions in the first tab page, while the access entry of the second application service does not occupy a resource position in the first tab page, so the render page of such second application service can be entered by switching the tab pages.

For example, suppose that a certain target page is associated with three tab pages, namely Gold Coins, Home Page, and Live Commerce, wherein the Gold Coins and Live Commerce correspond to specific second application services respectively, and the Home Page provides access entries to a plurality of first application services in the form of links. The specific page structure can be as shown in FIG. 3, and a component manager can be responsible for managing the tab pages (also referred to as page components) that need to be installed. The component manager also supports controlling the number and types of page components according to server data. The page components can be implemented by light application pages, native pages, hybrid development pages, H5 pages, and other types of pages. Each tab page can be an independently executable component (MultiTypeComponent), which is controlled by background data.

It should be noted that the first application services and the second application service in the embodiments of the present application do not specifically refer to a certain application service, but are different types of application services divided according to different traffic directing modes. Specifically, which application services act as the first application services and which application service acts as the second application service can be determined according to the practical support strategies or the personalized information of the users. Certainly, in a specific implementation, there may also be a case that traffic is directed to the same application service both through the links in the first tab page and through the tab page. For example, for a "Live Commerce" module, the home page may comprise a link to the "Live Commerce," and meanwhile, a tab page corresponding to the "Live Commerce" module also exists in the tab page, and so on.

In a specific implementation, there can also be various switching modes between different tab pages. For example, in one of the modes, the plurality of tab pages can be switched by performing a sliding operation in an arrangement direction of the tab options, so as to direct traffic to a render page of the second application service corresponding to the switched tab page. The arrangement direction of the tab options can be related to the arrangement mode of the content in a specific page. For example, if the content in the specific page is arranged vertically, the tab options can be arranged horizontally. At this time, the tab page can be switched by sliding left and right. Alternatively, if the page content is arranged horizontally, the tab options can be arranged vertically, and the tab pages can be switched by sliding up and down, and so on. Specifically, as shown in FIG. 3, the tab options can be displayed at the top of the page, and for example, can comprise several tab options such as "Gold Coins," "Home Page," and "Live Commerce," which correspond to three tab pages, where the "Home Page" can be a first tab page, and specifically, the tab option can be displayed in the center, and the tab options corresponding to other second tab pages can be displayed on both sides thereof. In this way, in a state of displaying the "Home Page," the render page corresponding to the "Gold Coin" application service, or the render page corresponding to the "Live Commerce" application service can be entered by sliding left and right.

There may also be various specific sliding modes. For example, specifically, the sliding operation may comprise a sliding operation performed in the tab page through a touch screen of an associated terminal device. Alternatively, it may further comprise a sliding gesture operation performed by an air gesture without touch of the touch screen, and so on. That is, for the latter, tab pages can be switched without touching the display screen. At this time, the sliding gestures can be collected through a camera of the terminal device, and so on.

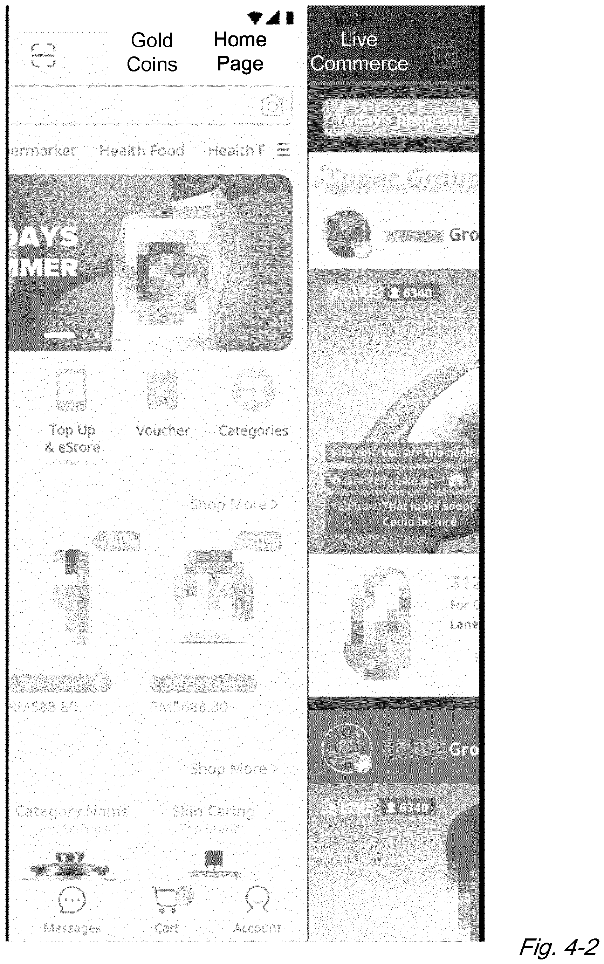

In a specific implementation, since the embodiments of the present application provide a relatively new traffic directing mode, users who are not familiar with the operation mode may switch to a certain second tab page for display due to misoperations and other reasons, and at this time, the users may be confused and do not know how to return to the first tab page that was originally displayed. To this end, in an optional embodiment, in the above-mentioned mode of switching by sliding, a transition animation with a pulling effect can also be provided in the process of switching from a source tab page to the target tab page, so as to prompt the users to switch back to the source tab page by sliding in an opposite direction. That is, through the page pulling effect displayed during the tab switching process, the users can be deeply impressed by the page switching process, and then can learn that the original tab page can be returned to by sliding in the opposite direction. For example, in a state shown in FIG. 4-1, if the users slide to the left, the "Home Page" gradually disappears to the left, and the "Live Commerce" page gradually enters from the right, and at a certain time, the page may disappear or the speed of entry may suddenly increase. For example, as shown in FIG. 4-2, it is an intermediate state in the switching process. After the switching is completed, the "Live Commerce" page can be displayed as shown in FIG. 4-3.

Another mode to switch tab pages may be to perform switching between the plurality of tab pages by clicking on the tab options corresponding to the tab pages, so as to direct traffic to the render page of the second application service corresponding to the switched tab page. That is, the users can also switch different tab pages by clicking on specific tab options at the top of the page.

In a specific implementation, since the content of the first tab page can be displayed in a default state, and for a specific page, the second tab page may only be useful to a small number of users. Therefore, the first tab page actually belongs to the main content displayed. The application service included in the first tab page may usually comprise a personalized recommendation module, such as "Guess You Like," and if the first tab page has been scrolled to the personalized recommendation module for the current user in a state of displaying the first tab page, a switching function between the plurality of tab pages can be set to a disabled state. That is, the personalized recommendation module can usually obtain a high conversion rate. If the user has browsed the module, the purpose of this browsing may be to decide whether there is content of interest in the recommended information, and the probability of entering other application services is not high. Therefore, in order to avoid affecting the browsing of the personalized recommendation module by the user, the tab page switching function can be disabled, so as to avoid switching to other tab pages due to misoperations, which affects the browsing of the user.

In addition, in an optional embodiment, the tab options corresponding to the plurality of tab pages can also be hidden after setting the switching function between the plurality of tab pages to a disabled state, so as to display more content about the first tab page in the screen space. Since the tab page switching function has been disabled, the tab options can also be hidden to avoid unnecessary occupation of the page space and allow the user to better focus on the personalized recommendation information.

In a specific implementation, after the render page of the second application service is switched to for display, the system tab option can be hidden, so that the user can obtain an immersive experience of the content of the render page of the second application service. The so-called system tab options may specifically refer to system tab options existing in pages such as the home page, for example, may comprise "Message," "Shopping Cart," "Mine," and so on. These options are usually useful in the state of displaying the first tab page, through which the user can view messages, or enter the shopping cart page, or enter the personal home page, etc. However, in the state of displaying the second tab page, since it is related to a specific application service, the browsing purpose of the user is usually clear, which is to browse the content in the page. Therefore, the system tab can be selected to be hidden, so that the user can better focus on the page content of the specific second application service. It should be noted that whether to hide the above-mentioned system tab option can be decided by the developer of the specific second application service, and if the above-mentioned system tab option needs to be hidden, it can be marked in the page data.

As described above, in the embodiments of the present application, the number of the tab pages is configurable. Specifically, it can be configured by the server according to specific operational requirements or the matching situation of the personalized information of the user. In addition, the second application service corresponding to the second tab page may also be configurable. For example, access entries can be provided to different second application services by tab pages in different cycles, or a matching second application service can be selected according to the personalized information of the user, and so on.

In addition, in an optional embodiment, a subscription to the second application service by a specific user can also be supported, that is, the access entry of which second application service is used as the second tab page can be customized by the user according to the requirement thereof. In a specific implementation, a variety of specific customization modes can be provided. For example, in one mode, a dragged first application service can be determined as the second application service by dragging an icon corresponding to the first application service in the first tab page to a tab option bar, and a new second tab page can be generated according to its render page. That is, the user can directly drag a certain application service from the first tab page to generate a second tab page, and the second tab page is used to display the render page of the dragged application service.

Alternatively, in another mode, an operation option for adding a new second tab page can also be provided. After receiving an operation request through the operation option, an optional application service list can be provided according to an application service set associated with the application program, the selected application service is determined as the second application service, and a new second tab page can be generated according to its corresponding render page.

In addition, in a specific implementation, since there may be some related content between different tab pages, the access state information of the user in the source tab page can also be brought to the target tab page in the process of switching the tab pages, so as to influence the display of the target tab page. Specifically, according to display state information of the source tab page before switching, the target tab page can be positioned to the location where the content related to the display state is located for display. For example, when accessing the first tab page, the user currently accesses a link about promotion activities of a home appliance category, and one of the second tab pages also has live commerce content about the commodity objects of the home appliance category. If the user performs an operation of switching to the second tab page for display at this time, the second tab page can be directly positioned to the location where the live commerce content of the commodity object of the home appliance category is located for display.

In conclusion, with the embodiments of the present application, a plurality of tab pages can be provided for a target page, comprising a first tab page and at least one second tab page, wherein the first tab page can comprise links to a plurality of first application services, so as to display a render page of the first application services by clicking on the links and the like. The second tab page mainly corresponds to a render page of a second application service, so that the render page of the second application service can be displayed by switching the tab pages. It can be seen that the embodiments of the present application enrich the way to enter render pages of the application services, so that some application services do not need to occupy the resource positions of the first tab page, and the render page of the second application service can also be entered through the first tab page without causing excessive height of the first tab page. Therefore, the plurality of application services can be displayed more efficiently, and meanwhile, excessive impact on traffic balance among the plurality of application services can be avoided.

### Embodiment II

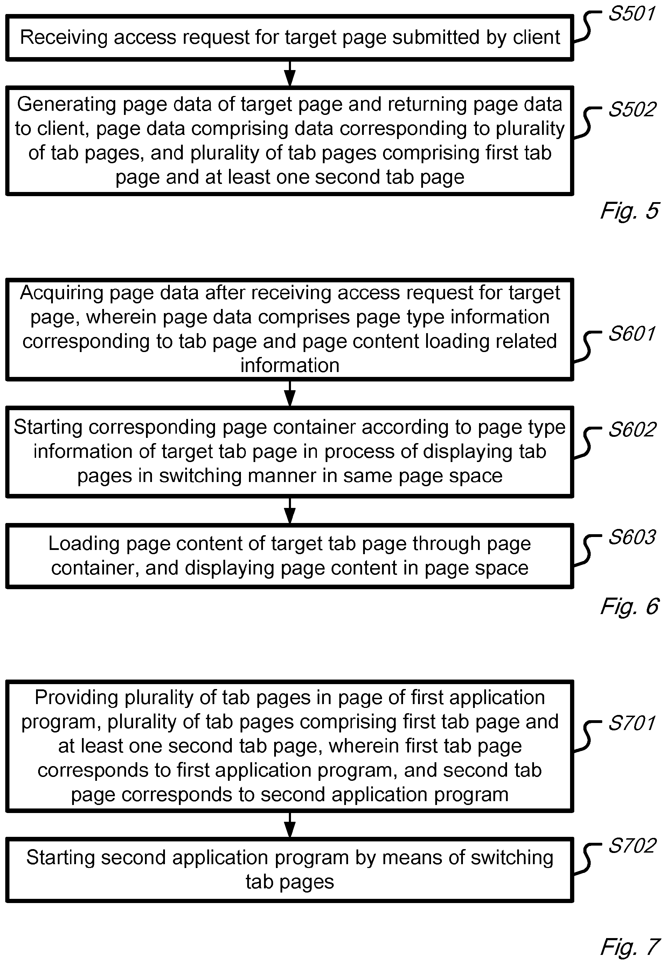

The embodiment II provides a method for providing page information from the perspective of a server. Referring to FIG. 5, the method may specifically comprise:
S501: receiving an access request for a target page submitted by a client; and
S502: generating page data of the target page and returning the page data to the client, the page data comprising data corresponding to a plurality of tab pages, and the plurality of tab pages comprising a first tab page and at least one second tab page, wherein the first tab page comprises links to a plurality of first application services, and the links are used to jump to render a render page of the first application module; and the second tab page corresponds to a render page of a second application service, so as to switch to the second tab page to display the render page of the second application service by receiving a switching operation performed between the plurality of tab pages.

A target second application service matched with a user can be selected from a second application service set according to personalized information of the user associated with the client, and the page data can be generated according to information of the render page corresponding to the target second application service.

### Embodiment III

As described in the above embodiment I, in a specific implementation, different tab pages can correspond to different page types, that is, they can correspond to different page architectures, so that developers of specific pages displayed in the tab pages can freely develop and design pages according to the actual needs and the like in the pages to ensure the desired display effect. However, in practical applications, the solution that different tab pages correspond to different page types can also be applied to other scenarios of multi-tab pages. For example, in a certain page, a plurality of tab pages are also provided, but the tab pages are juxtaposed. For example, the tab pages correspond to render pages of different categories, respectively, or correspond to render pages of different event venues, and so on. In this case, different render pages can also be designed as different page types, but can be displayed in a switching manner in the same page space.

To this end, the embodiment III of the present application provides a page display method. Referring to FIG. 6, the method can specifically comprise:
S601: acquiring page data after receiving an access request for a target page, wherein the page data comprises page type information corresponding to the tab page and page content loading related information;
S602: starting a corresponding page container according to page type information of a target tab page in a process of displaying the tab pages in a switching manner in the same page space; and
S603: loading page content of the target tab page through the page container, and displaying the page content in the page space.

The plurality of tab pages may correspond to a variety of different page types. In this case, page containers corresponding to the variety of different page types can be started in the process of displaying the tab pages in a switching manner.

In a specific implementation, the page content corresponding to the target tab page can be loaded when the target tab page needs to be switched to for display. Alternatively, the page content corresponding to the target tab page is preloaded before the target tab page is switched to for display.

In addition, the page may further comprise a tab option display area, and the tab option display area determines a corresponding background theme according to a background color of the currently displayed tab page.

### Embodiment IV

The embodiment IV further provides a page, wherein the page is a client page of an application program, and the application program is associated with an application service set;
the page comprises a plurality of tab pages, and the plurality of tab pages comprise a first tab page and at least one second tab page, wherein the first tab page displays links to a plurality of first application services in the application service set in an aggregated manner, so as to provide an access entry to the first application services through the links; and the second tab page corresponds to a render page of a second application service in the application service set, so as to provide an access entry to the second application service by switching to the tab pages.

Specifically, the top of the page may comprise tab options corresponding to the tab pages.

After the first tab page is scrolled to display personalized recommendation content for a user, a switching function of the tab pages is disabled and the tab options are hidden.

A system tab option is displayed at a bottom of the page in a state of displaying the first tab page; and the system tab option at the bottom of the page is hidden in a state of switching to the second tab page for display.

In addition, the plurality of tab pages may correspond to a variety of different page types.

### Embodiment V

In the embodiment V, switching among a variety of different application programs can also be realized by switching tab pages. For example, a plurality of tab pages are provided in certain first application program, wherein one first tab page thereof may correspond to the first application program, and a plurality of second tab pages can correspond to a plurality of second application programs. At this time, in the state of displaying the first tab page, the second tab pages are switched to by sliding left and right, and the corresponding second application programs are started. That is, the embodiment V provides a new way to start an application program-by switching tab pages in one application program, other application programs can be directly started without a series of operations such as executing the exit of the current first application program, finding the icon of a second application program on the desktop, clicking the icon of the second application program, and the like; therefore, the operation path of the user can be shortened.

Specifically, the embodiment V of the present application provides an application program switching method. Referring to FIG. 7, the method may specifically comprise:
S701: providing a plurality of tab pages in a page of a first application program, the plurality of tab pages comprising a first tab page and at least one second tab page, wherein the first tab page corresponds to the first application program, and the second tab page corresponds to a second application program; and
S702: starting the second application program by switching the tab pages.

In a specific implementation, an operation option for configuring the second application program associated with the second tab page may also be provided, so that which specific second application programs to be started in the above form can be customized by the user. Certainly, in order to avoid unsupported cases, a list of application programs that are supported to be started in the above manner can also be provided to the user, so that the user can select from the list.

It should be noted that the embodiments of the present application may involve the use of user data. In practical applications, user-specific personal data may be used in the solutions described herein within the scope of the applicable laws and regulations (e.g., explicit consent from the user, practical notification to the user, etc.) in compliance with the applicable laws and regulations in the host country.

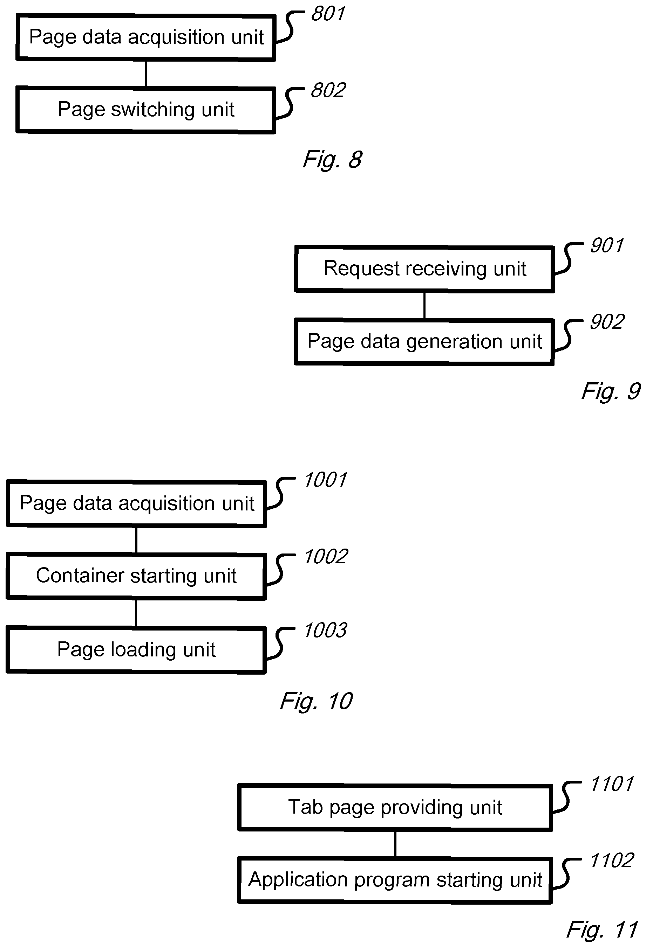

Corresponding to the embodiment I, the embodiment of the present application further provides a page display apparatus. Referring to FIG. 8, the apparatus may comprise:
a page data acquisition unit 801, configured to acquire page data after receiving an access request for a target page, the page data comprising data corresponding to a plurality of tab pages, and the plurality of tab pages comprising a first tab page and at least one second tab page, wherein the first tab page comprises links to a plurality of first application services, and the links are used to jump to render a render page of the first application services; the second tab page corresponds to a render page of a second application service; and
a page switching unit 802, configured to switch to the second tab page to display the render page of the second application service by receiving a switching operation performed between the plurality of tab pages.

In a specific implementation, the page switching unit may also be configured to return to the first tab page by a switching operation performed between the plurality of tab pages after the render page of the second application service is displayed.

Specifically, the page switching unit can be specifically configured to:
perform switching between the plurality of tab pages by performing a sliding operation in an arrangement direction of tab options, so as to display the render page of the second application service.

The sliding operation comprises a sliding operation performed in the tab pages through a touch screen of an associated terminal device.

Alternatively, the sliding operation comprises a sliding gesture operation performed by an air gesture without touch of the touch screen.

In addition, the apparatus may further comprise:
an animation providing unit, configured to provide a transition animation with a pulling effect in a process of switching from a source tab page to a target tab page, so as to prompt a user to switch back to the source tab page by sliding in an opposite direction.

Alternatively, the page switching unit can also be configured to:
perform switching between the plurality of tab pages by clicking on tab options corresponding to the tab pages, so as to display the render page of the second application service.

Furthermore, the apparatus may further comprise:
a disabling unit, configured to set a switching function between the plurality of tab pages to a disabled state if the first tab page has been scrolled to a personalized recommendation module for a current user in a state of displaying the first tab page;
a first hiding unit, configured to hide the tab options corresponding to the plurality of tab pages after setting the switching function between the plurality of tab pages to the disabled state, so as to display more content about the first tab page in a screen space; and
a second hiding unit, configured to hide a system tab option after the render page of the second application service is switched to for display.

The number of the tab pages is configurable.

The second application service corresponding to the second tab page is configurable.

Specifically, the second application service corresponding to the second tab page is configured according to personalized information of a current page.

Alternatively, the apparatus may further comprise:
a drag operation receiving unit, configured to receive an operation of dragging an icon corresponding to the first application service in the first tab page to a tab option bar in a state of displaying the first tab page; and
a first adding unit, configured to determine the dragged first application service as the second application service, and generate a new second tab page according to a render page thereof.

Alternatively, the apparatus may further comprise:
an operation option providing unit, configured to provide an operation option for adding a new second tab page; and
a second adding unit, configured to provide an optional application service list after receiving an operation request through the operation option, and generate the new second tab page according to a render page corresponding to a selected application service.

Furthermore, the apparatus may further comprise:
a positioning display unit, configured to, in a process of switching the tab pages, according to display state information of the source tab page before switching, position the target tab page to a position where content related to the display state is located for display.

The plurality of tab pages can correspond to a variety of different page types, and the page data further comprises page type information corresponding to the tab pages;
and at this time, the apparatus may further comprise:
a container starting unit, configured to start a page container corresponding to a type of one of the target tab pages when page content corresponding to the target tab page needs to be loaded so as to load the corresponding page content through the page container.

The page types comprise system native pages, light application pages, fifth-generation hypertext markup language (HTML5) pages, or hybrid application pages.

Specifically, the container starting unit may be configured to load the page content corresponding to the target tab page when the target tab page needs to be switched to for display.

Alternatively, the container starting unit may also be configured to preload the page content corresponding to the target tab page before the target tab page is switched to for display.

In addition, the page may comprise a tab option display area, and the tab option display area determines a corresponding background theme according to a background color of the currently displayed tab page.

Specifically, the second application service is one of the plurality of first application services;
or the second application service is different from the plurality of first application services.

The apparatus may further comprise:
a display control unit, configured to, in a state of displaying the first tab page in a full screen, display the links to the plurality of first application services in a scrolling manner in response to a sliding operation in a length direction of the screen, and display the plurality of tab pages in a switching manner in response to a sliding operation in a width direction of the screen.

Corresponding to the embodiment II, the embodiment of the present application further provides an apparatus for providing page information. Referring to FIG. 9, the apparatus may further comprise:
a request receiving unit 901, configured to receive an access request for a target page submitted by a client;
a page data generation unit 902, configured to generate page data of the target page and return the page data to the client, the page data comprising data corresponding to a plurality of tab pages, and the plurality of tab pages comprising a first tab page and at least one second tab page, wherein the first tab page comprises links to a plurality of first application services, and the links are used to jump to render a render page of the first application module; and the second tab page corresponds to a render page of a second application service, so as to switch to the second tab page to display the render page of the second application service by receiving a switching operation performed between the plurality of tab pages.

The page data generation unit may be specifically configured to select a target second application service matched with a user from a second application service set according to personalized information of the user associated with the client, and generate the page data according to information of a render page corresponding to the target second application service.

Corresponding to the embodiment III, the embodiment of the present application further provides a page display apparatus. Referring to FIG. 10, the apparatus may comprise:
a page data acquisition unit 1001, configured to acquire page data after receiving an access request for a target page, wherein the page data comprises page type information corresponding to the tab page and page content loading related information;
a container starting unit 1002, configured to start a corresponding page container according to page type information of a target tab page in a process of displaying the tab pages in a switching manner in the same page space; and
a page loading unit 1003, configured to load page content of the target tab page through the page container and display the page content in the page space.

The plurality of tab pages correspond to a variety of different page types, and page containers corresponding to the variety of different page types are started in the process of displaying the tab pages in a switching manner.

Specifically, the page loading unit may be specifically configured to load the page content corresponding to the target tab page when the target tab page needs to be switched to for display.

Alternatively, the page content corresponding to the target tab page is preloaded before the target tab page is switched to for display.

The page further comprises a tab option display area, and the tab option display area determines a corresponding background theme according to a background color of the currently displayed tab page.

Corresponding to the embodiment V, the embodiment of the present application further provides an apparatus for switching an application program. Referring to FIG. 11, the apparatus may comprise:
a tab page providing unit 1101, configured to provide a plurality of tab pages in a page of a first application program, the plurality of tab pages comprising a first tab page and at least one second tab page, wherein the first tab page corresponds to the first application program, and the second tab page corresponds to a second application program; and
an application program starting unit 1102, configured to start the second application program by switching the tab pages.

Specifically, the apparatus may further comprise:
a configuration operation option providing unit, configured to provide an operation option for configuring the second application program associated with the second tab page so as to configure the second application program associated with the second tab page through the operation option.

In addition, the apparatus further provides a computer-readable storage medium having a computer program stored thereon which, when executed by a processor, implements the steps described in any of the above-described method embodiments;
and an electronic device comprising:
one or more processors; and
a memory associated with the one or more processors, the memory being configured to store program instructions which, when read and executed by the one or more processors, execute the steps described in any of the above-described method embodiments.

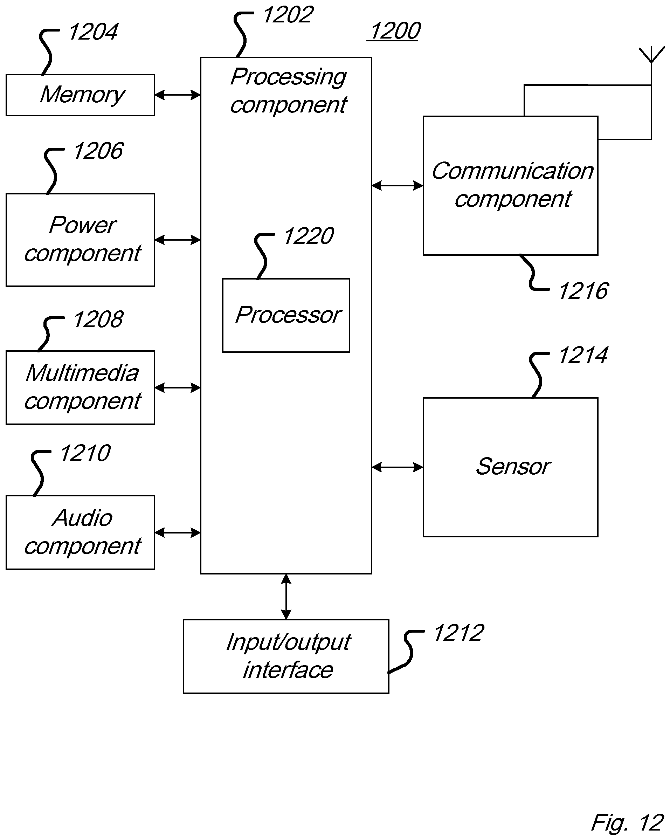

FIG. 12 exemplarily shows the architecture of an electronic device, for example, the device 1200 may be a mobile phone, a computer, a digital broadcasting terminal, a messaging device, a game console, a tablet device, a medical device, a fitness device, a personal digital assistant, an aircraft, and the like.

Referring to FIG. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls the overall operation of the device 1200, such as operations associated with display, phone calls, data communications, camera operations, and recording operations. The processing component 1202 may include one or more processors 1220 to execute instructions to complete all or part of the steps of the methods provided by the technical solutions of the present disclosure. Additionally, the processing component 1202 may include one or more modules that facilitate interaction between the processing component 1202 and other components. For example, the processing component 1202 may include a multimedia module to facilitate interaction between the multimedia component 1208 and the processing component 1202.

The memory 1204 is configured to store various types of data to support operations on the device 1200. Examples of such data include instructions, contact data, phonebook data, messages, pictures, videos, and the like used for any application program or method operating on the device 1200. The memory 1204 may be implemented by any type of volatile or non-volatile memory device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 1206 provides power to various components of the device 1200. The power components 1206 may include a power management system, one or more power supplies, and other components associated with generating, managing, and distributing power for the device 1200.

The multimedia component 1208 includes a screen that provides an output interface between the device 1200 and a user. In some embodiments, the screen may include a liquid crystal display (LCD) and a touch panel (TP). If the screen includes the touch panel, the screen may be implemented as a touch screen to receive input signals from a user. The touch panel includes one or more touch sensors to sense touch, sliding, and gestures on the touch panel. The touch sensor may not only sense the boundary of a touch or slide action, but also detect the duration and pressure related to the touch or sliding operation. In some embodiments, the multimedia component 1208 includes a front-facing camera and/or a rear-facing camera. When the device 1200 is in an operation mode, such as a shooting mode or a video mode, the front-facing camera and/or the rear-facing camera may receive external multimedia data. Each of the front-facing camera and/or the rear-facing camera can be a fixed optical lens system or have focal length and optical zoom capability.

The audio component 1210 is configured to output and/or input audio signals. For example, the audio component 1210 includes a microphone (MIC) configured to receive an external audio signal when the device 1200 is in an operating mode, for example, in a call mode, a recording mode, and a voice recognition mode. The received audio signal may be further stored in a memory 1204 or sent through a communication component 1216. In some embodiments, the audio component 1210 further includes a speaker for outputting an audio signal.

The I/O interface 1212 provides an interface between the processing component 1202 and a peripheral interface module that may be a keyboard, a click wheel, buttons, or the like. These buttons may include, but are not limited to: home button, volume buttons, start button, and lock button.

The sensor component 1214 includes one or more sensors for providing status assessment of various aspects of the device 1200. For example, the sensor component 1214 can detect the open/closed state of the device 1200, and the relative positioning of components such as the display and keypad of the device 1200. The sensor component 1214 can also detect a change in the position of the device 1200 or a component of the device 1200, the presence or absence of user contact with the device 1200, orientation or acceleration/deceleration of the device 1200, and temperature changes of the device 1200. The sensor assembly 1214 may include a proximity sensor configured to detect the presence of nearby objects in the absence of any physical contact. The sensor assembly 1214 may also include a light sensor such as a CMOS or CCD image sensor for use in imaging applications. In some embodiments, the sensor assembly 1214 may also include an acceleration sensor, a gyroscope sensor, a magnetic sensor, a pressure sensor, or a temperature sensor.

The communication component 1216 is configured to facilitate wired or wireless communications between the device 1200 and other devices. The device 1200 can access a wireless network based on communication standards, such as mobile communication networks like WiFi, or 2G, 3G, 4G/LTE, and 5G. In an exemplary embodiment, the communication component 1216 receives, through a broadcast channel, broadcast signals or broadcast-related information from an external broadcast management system. In an exemplary embodiment, the communication component 1216 further comprises a near field communication (NFC) module to facilitate short range communications. For example, the NFC module can be implemented based on the radio frequency identifier (RFID) technology, the infrared data association (IrDA) technology, the ultra-wideband (UWB) technology, the Bluetooth (BT) technology, and other technologies.

In an exemplary embodiment, the device 1200 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

In an exemplary embodiment, a non-transitory computer-readable storage medium including instructions is also provided, such as a memory 1204 including instructions, and the above-mentioned instructions can be executed by the processor 1220 of the device 1200 to complete the method provided by the technical solution of the present disclosure. For example, the non-transitory computer-readable storage medium may be ROM, random access memory (RAM), CD-ROM, a magnetic tape, a floppy disk, an optical data storage device, and the like.

It can be seen from the description of the above embodiments that those skilled in the art can clearly understand that the present application can be implemented by software and a necessary general hardware platform. Based on such an understanding, the part of the technical solution of the present application, which is essential or contributes to the conventional techniques, can be embodied in the form of a software product. The computer software product can be stored in a storage medium, such as a ROM/RAM, a magnetic disk, and an optical disk, and include several instructions for enabling a computer device (which may be a personal computer, a server, a network device, or the like) to execute the methods described in the embodiments or some parts of the embodiments of the present application.

The various embodiments in this specification are all described in a progressive manner. The various embodiments may refer to other embodiments for the same or similar parts, and each of the embodiments focuses on the parts differing from the other embodiments. In particular, the system or system embodiments are basically similar to the method embodiments, the description for these embodiments is thus relatively brief, and the description of the method embodiments may be referred to for relevant details. The system and system embodiments described above are only examples, wherein the units described as separate components may or may not be physically separated; and the components displayed as units may or may not be physical units; that is, the units may be located in one place, or may be distributed on a plurality of network units. Some or all of the modules may be selected according to actual needs to achieve the objectives of the solutions of the embodiments. Those of ordinary skill in the art may understand and implement the embodiments without creative efforts.

The page display method and apparatus, and the electronic device provided by the present application have been introduced in detail above. The principles and implementations of the present application are described with specific examples herein. The descriptions of the above embodiments are only used to help understand the methods and the core idea of the present application. At the same time, for those skilled in the art, according to the idea of the present application, there will be modifications in specific implementations and the application scope. In conclusion, the content of the present specification should not be construed as a limitation to the present application.

## Claims

1. A page display method, comprising:
acquiring page data after receiving an access request for a target page, the page data comprising data corresponding to a plurality of tab pages, and the plurality of tab pages comprising a first tab page and at least one second tab page, wherein the first tab page comprises links to a plurality of first application services, and the links are used to jump to render a render page of the first application services; the second tab page corresponds to a render page of a second application service; and
switching to the second tab page to display the render page of the second application service by receiving a switching operation performed between the plurality of tab pages.

2. The method according to claim 1, further comprising:
returning to the first tab page by the switching operation performed between the plurality of tab pages after the render page of the second application service is displayed.

3. The method according to claim 1, wherein
the switching to the second tab page by receiving a switching operation performed between the plurality of tab pages comprises:
performing switching between the plurality of tab pages by performing a sliding operation in an arrangement direction of tab options.

4. The method according to claim 3, wherein
the sliding operation comprises a sliding operation performed in the tab pages through a touch screen of an associated terminal device.

5. The method according to claim 3, wherein
the sliding operation comprises a sliding gesture operation performed by an air gesture without touch of a touch screen.

6. The method according to claim 3, further comprising:
providing a transition animation with a pulling effect in a process of switching from a source tab page to a target tab page, so as to prompt a user to switch back to the source tab page by sliding in an opposite direction.

7. The method according to claim 1, wherein
the switching to the second tab page by receiving a switching operation performed between the plurality of tab pages comprises:
performing switching between the plurality of tab pages by clicking on tab options corresponding to the tab pages.

8. The method according to claim 1, further comprising:
setting a switching function between the plurality of tab pages to a disabled state if the first tab page has been scrolled to a personalized recommendation module for a current user in a state of displaying the first tab page.

9. The method according to claim 8, further comprising:
hiding tab options corresponding to the plurality of tab pages after setting the switching function between the plurality of tab pages to the disabled state, so as to display more content about the first tab page in a screen space.

10. The method according to claim 1, further comprising:
hiding a system tab option after the render page of the second application service is switched to for display.

11. The method according to any one of claims 1 to 10, wherein
the number of the tab pages is configurable.

12. The method according to any one of claims 1 to 10, wherein
the second application service corresponding to the second tab page is configurable.

13. The method according to claim 12, wherein
the second application service corresponding to the second tab page is configured according to personalized information of a current page.

14. The method according to claim 13, further comprising:
receiving an operation of dragging an icon corresponding to the first application service in the first tab page to a tab option bar in a state of displaying the first tab page; and
determining the dragged first application service as the second application service, and generating a new second tab page according to a render page thereof.

15. The method according to claim 13, further comprising:
providing an operation option for adding a new second tab page; and
providing an optional application service list after receiving an operation request through the operation option, and generating the new second tab page according to a render page corresponding to a selected application service.

16. The method according to any one of claims 1 to 10, further comprising:
in a process of switching the tab pages, according to display state information of the source tab page before switching, positioning the target tab page to a position where content related to display state is located for display.

17. The method according to any one of claims 1 to 10, wherein
the plurality of tab pages correspond to a variety of different page types, and the page data further comprises page type information corresponding to the tab pages;
the method further comprises:
starting a page container corresponding to a type of one of the target tab pages when page content corresponding to the target tab page needs to be loaded, so as to load the corresponding page content through the page container.

18. The method according to claim 17, wherein
the page types comprise system native pages, light application pages, fifth-generation hypertext markup language (HTML5) pages, or hybrid application pages.

19. The method according to claim 17, wherein
the page content corresponding to the target tab page is loaded when the target tab page needs to be switched to for display.

20. The method according to claim 17, wherein
the page content corresponding to the target tab page is preloaded before the target tab page is switched to for display.

21. The method according to any one of claims 1 to 10, wherein
the page further comprises a tab option display area, and the tab option display area determines a corresponding background theme according to a background color of the currently displayed tab page.

22. The method according to any one of claims 1 to 10, wherein
the second application service is one of the plurality of first application services;
or the second application service is different from the plurality of first application services.

23. The method according to any one of claims 1 to 10, further comprising:
in a state of displaying the first tab page in a full screen, displaying the links to the plurality of first application services in a scrolling manner in response to a sliding operation in a length direction of the screen, and displaying the plurality of tab pages in a switching manner in response to a sliding operation in a width direction of the screen.

24. A method for providing page information, comprising:
receiving an access request for a target page submitted by a client; and
generating page data of the target page and returning the page data to the client, the page data comprising data corresponding to a plurality of tab pages, and the plurality of tab pages comprising a first tab page and at least one second tab page, wherein the first tab page comprises links to a plurality of first application services, and the links are used to jump to render a render page of the first application module; and the second tab page corresponds to a render page of a second application service, so as to switch to the second tab page to display the render page of the second application service by receiving a switching operation performed between the plurality of tab pages.

25. The method according to claim 24, wherein
the generating page data of the target page comprises:
selecting a target second application service matched with a user from a second application service set according to personalized information of the user associated with the client, and generating the page data according to information of a render page corresponding to the target second application service.

26. A page display method, comprising:
acquiring page data after receiving an access request for a target page, wherein the page data comprises page type information corresponding to the tab page and page content loading related information;
starting a corresponding page container according to page type information of a target tab page in a process of displaying the tab pages in a switching manner in the same page space; and
loading page content of the target tab page through the page container, and displaying the page content in the page space.

27. The method according to claim 26, wherein
the plurality of tab pages correspond to a variety of different page types, and page containers corresponding to the variety of different page types are started in the process of displaying the tab pages in a switching manner.

28. The method according to claim 26, wherein
the page content corresponding to the target tab page is loaded when the target tab page needs to be switched to for display.

29. The method according to claim 26, wherein
the page content corresponding to the target tab page is preloaded before the target tab page is switched to for display.

30. The method according to claim 26, wherein
the page further comprises a tab option display area, and the tab option display area determines a corresponding background theme according to a background color of the currently displayed tab page.

31. A page, wherein
the page is a client page of an application program, and the application program is associated with an application service set;
the page comprises a plurality of tab pages, and the plurality of tab pages comprise a first tab page and at least one second tab page, wherein the first tab page displays links to a plurality of first application services in the application service set in an aggregated manner, so as to provide an access entry to the first application services through the links; and the second tab page corresponds to a render page of a second application service in the application service set, so as to provide an access entry to the second application service by switching to the tab pages.

32. The page according to claim 31, wherein
a top of the page comprises tab options corresponding to the tab pages.

33. The page according to claim 31, wherein
after the first tab page is scrolled to display personalized recommendation content for a user, a switching function of the tab pages is disabled and the tab options are hidden.

34. The page according to claim 31, wherein
a system tab option is displayed at a bottom of the page in a state of displaying the first tab page; and the system tab option at the bottom of the page is hidden in a state of switching to the second tab page for display.

35. The page according to claim 31, wherein
the plurality of tab pages correspond to a variety of different page types.

36. An application program switching method, comprising:
providing a plurality of tab pages in a page of a first application program, the plurality of tab pages comprising a first tab page and at least one second tab page, wherein the first tab page corresponds to the first application program, and the second tab page corresponds to a second application program; and
starting the second application program by switching the tab pages.

37. The method according to claim 36, further comprising:
providing an operation option for configuring the second application program associated with the second tab page, so as to configure the second application program associated with the second tab page through the operation option.

38. A page display apparatus, comprising:
a page data acquisition unit, configured to acquire page data after receiving an access request for a target page, the page data comprising data corresponding to a plurality of tab pages, and the plurality of tab pages comprising a first tab page and at least one second tab page, wherein the first tab page comprises links to a plurality of first application services, and the links are used to jump to render a render page of the first application services; the second tab page corresponds to a render page of a second application service; and
a page switching unit, configured to switch to the second tab page to display the render page of the second application service by receiving a switching operation performed between the plurality of tab pages.

39. An apparatus for providing page information, comprising:
a request receiving unit, configured to receive an access request for a target page submitted by a client; and
a page data generation unit, configured to generate page data of the target page and return the page data to the client, the page data comprising data corresponding to a plurality of tab pages, and the plurality of tab pages comprising a first tab page and at least one second tab page, wherein the first tab page comprises links to a plurality of first application services, and the links are used to jump to render a render page of the first application module; and the second tab page corresponds to a render page of a second application service, so as to switch to the second tab page to display the render page of the second application service by receiving a switching operation performed between the plurality of tab pages.

40. A page display apparatus, comprising:
a page data acquisition unit, configured to acquire page data after receiving an access request for a target page, wherein the page data comprises page type information corresponding to the tab page and page content loading related information;
a container starting unit, configured to start a corresponding page container according to page type information of a target tab page in a process of displaying the tab pages in a switching manner in the same page space; and
a page loading unit, configured to load page content of the target tab page through the page container and display the page content in the page space.

41. An application program switching apparatus, comprising:
a tab page providing unit, configured to provide a plurality of tab pages in a page of a first application program, the plurality of tab pages comprising a first tab page and at least one second tab page, wherein the first tab page corresponds to the first application program, and the second tab page corresponds to a second application program; and
an application program starting unit, configured to start the second application program by switching the tab pages.

42. A computer-readable storage medium having a computer program stored thereon which, when executed by a processor, implements the steps of the method according to any one of claims 1 to 37.

43. An electronic device, comprising:
one or more processors; and
a memory associated with the one or more processors, the memory being configured to store program instructions which, when read and executed by the one or more processors, execute the steps of the method according to any one of claims 1 to 37.
